# EUROPÄISCHE PATENTSCHRIFT

(11) **EP 0 882 167 B1**
(45) Veröffentlichungstag und Bekanntmachung des Hinweises auf die Patenterteilung: **22.09.1999**
(21) Anmeldenummer: 97900539.4
(22) Anmeldetag: 29.01.1997
(51) Int. Cl.: E05B 73/00

(54) **VERFAHREN ZUR SICHERUNG GEGEN WARENDIEBSTAHL UND VORRICHTUNG ZUR DURCHFÜHRUNG DES VERFAHRENS**
METHOD OF SECURING AGAINST THEFT OF GOODS AND DEVICE FOR CARRYING OUT SAID METHOD
SYSTEME DE PROTECTION CONTRE LE VOL DE MARCHANDISES ET DISPOSITIF POUR LA MISE EN OEUVRE DUDIT PROCEDE

(30) Priorität: 22.02.1996 CH 46696
(43) Veröffentlichungstag der Anmeldung: 09.12.1998
(73) Patentinhaber: Maurer, Albert, 8624 Grüt (CH)
(72) Erfinder: MAURER, Albert, CH-8624 Grüt (CH); MEYER, Urs, CH-8172 Niederglatt (CH)
(74) Vertreter: Patentanwaltsbüro Feldmann AG
(86) Internationale Anmeldenummer: CH9700027
(87) Internationale Veröffentlichungsnummer: WO9731170

(56) Entgegenhaltungen:
- US-A- 4 523 356
- US-A- 4 774 503

## Beschreibung

Die Erfindung betrifft ein Verfahren zur Sicherung gegen Warendiebstahl nach dem Oberbegriff des unabhängigen Patentanspruches 1 und Vorrichtung zur Durchführung des Verfahrens mit Sicherungselementen und Lösegerät.

Auf dem Markt sind magnetisch lösbare Diebstahlsicherungen bekannt und weit verbreitet. Die zu schützende Ware, beispielsweise Kleider, werden mit einer Kennmarke, einem sogenannten Tag versehen. Dieser Tag besteht aus einem Arretierteil und einem Stift, welcher durch die Ware durchgestossen ist und im Arrettierteil festgehalten ist. Stift und Arretierteil sind so unlösbar mit der zu schützenden Ware verbunden. Der Stift wird im Arretierteil des Tags gegen Herausziehen gesichert, indem er zwei Verkeilelemente in Form von flachen oder gewölbten Blechplättchen durchstösst, welche sich gegeneinander und somit gegenüber dem Stiften verkeilen. Die Verkeilung geschieht durch leichten Federdruck und/oder durch kleine Kügelchen zwischen den beiden Blechplättchen. Mit einem starken Lösemagneten als Lösegerät können die Blechplättchen oder die Kügelchen von aussen berührungslos seitwärts gezogen werden, worauf der Stift freigegeben wird und rückwärts aus der Ware gezogen werden kann. Die Tags können zusätzlich mit Farbbehältern und/oder mit Induktionsspulen versehen sein. Auf jeden Fall sind sie so ausgeführt, dass ein gewaltsames Trennen der Tags von der Ware zur Zerstörung oder mindestens zu erheblicher Beschädigung der Ware führen.

Alle diese Diebstahlsicherungen schützen aber nicht vor den erheblichen Diebstählen, welche durch das Verkaufspersonal selbst oder mit dessen Unterstützung begangen werden. Diese Beispielsweise zeigt US-A-4 523 356 eine Diebstahlsicherung dieser Art. Allerdings bestehen hier die Verkeilelemente aus einer Anzahl Kügelchen, welche den Stift gegenüber dem Arretierteil verkeilen Diese Kügelchen werden von einem Amboss, welcher unter Federdruck die Kügelchen gegen das tassenförmige Gehäuse des Arretierteiles und gegen den Sicherungsstiften drückt, verkeilt Beim Lösen der Diebstahlsicherung wird der Amboss durch einen Lösemagneten nach unten gezogen, wodurch die Kügelchen den Sicherungsstiften freigeben. Als Lösemagnet wird dabei ein Elektromagnet verwendet.

Diebstahlsicherungen lassen sich mit jedem Lösemagneten oder mit allenfalls sogar mit einem beliebigen, starken Permanentmagneten lösen, ohne das die Ware beschädigt wird.

Aufgabe der Erfindung ist es, ein Verfahren zur Sicherung gegen Warendiebstahl zu schaffen, welches ein unberechtigtes Lösen einer derartigen Diebstahlsicherung durch Benützung von Permanentmagneten jeder Art verunmöglicht. Ebenfalls soll eine Vorrichtung zur Durchführung des Verfahrens zur Erfindungsaufgabe gehören.

Diese Aufgabe wird durch die in den Patentansprüchen 1 und 5 angegebene Erfindung gelöst.

Ein zusätzlicher Vorteil der Erfindung ist es, dass das Lösen der Diebstahlsicherung von der Bezahlung, respektive von einer Kontrollfunktion an einer Kasse abhängig gemacht werden kann.

Ein weiterer Vorteil der Erfindung ergibt sich, indem Warendiebstähle mittels unberechtigtem Lösen der Diebstahlsicherungen durch Verkaufspersonal oder mit Unterstützung durch Verkaufspersonal verunmöglicht oder mindestens massgebend erschwert wird.

Die Erfindung wird nachstehend im Zusammenhang mit den Zeichnungen beschrieben. Es zeigen:
Figur 1 zeigt eine Diebstahlsicherung nach dem Stande der Technik
Figur 2 zeigt eine erfindungsgemässe Diebstahlsicherung in einer ersten Variante im Querschnitt;
Figur 3 zeigt ein zugehörendes Lösegerät mit eingelegter Diebstahlsicherung während dem Lösevorgang im Querschnitt;
Figur 4 zeigt eine erfindungsgemässe Diebstahlsicherung in einer bevorzugten Variante im Querschnitt; und
Figur 5 zeigt ein Schema von Zusammenhang und Anordnung von Lösegerät, Diebstahlsicherung, Steuerung und Freigabefunktion an der Kasse.

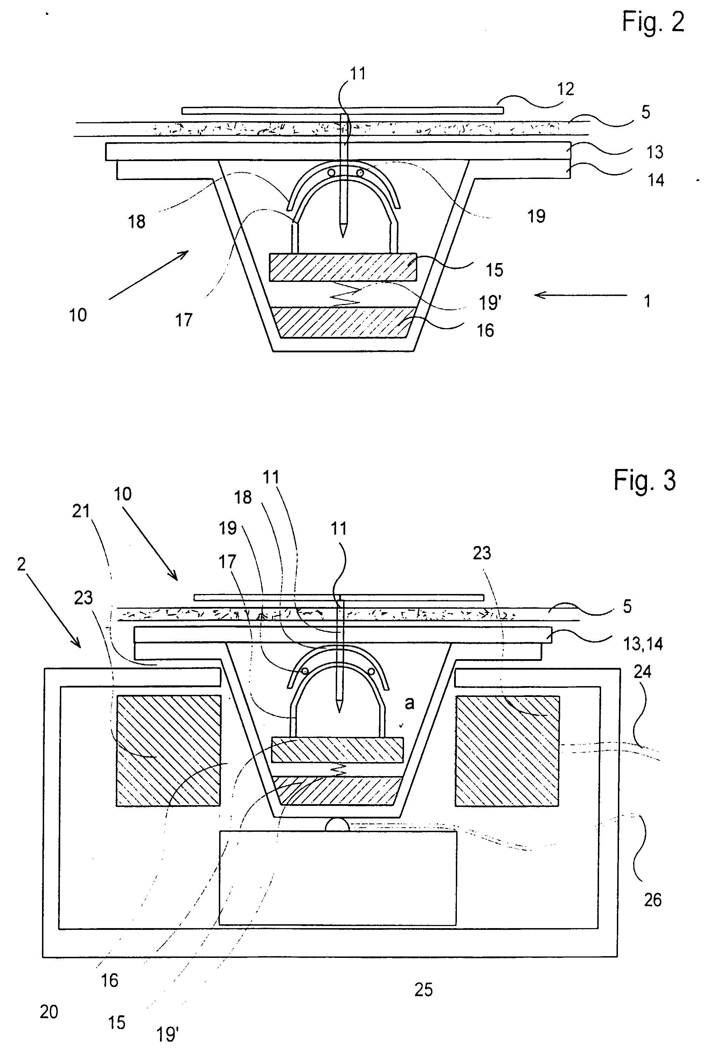

Das erfindungsgemässe Verfahren zur Sicherung gegen Warendiebstahl wird im Zusammenhang mit den Figuren 1 bis 5 nun näher beschrieben.

In Figur 1 ist eine Diebstahlsicherung nach dem Stande der Technik dargestellt. Die zu Schützende Ware 5, beispielsweise Kleider, werden bei einer derartigen Diebstahlsicherung, mit einem sogenannten Tag als Sicherungselement, versehen. Dieser Tag besteht aus einem Arretierteil 10 und einem Stift 11, welcher einen breiten Kopf 12 aufweist. Der Stift 11 ist durch die Ware 5 durchgestossen und im Arretierteil 10 festgehalten und gegen herausziehen gesichert. Dazu durchstösst er zwei Verkeilelemente 17,18 in Form von flachen oder gewölbten Blechplättchen, welche sich gegeneinander und somit gegenüber dem Stiften 11 verkeilen. Die Verkeilung geschieht unter Einwirkung eines Arretierkraftfeldes, hier durch leichten Federdruck und/oder durch kleine Kügelchen 19 zwischen den beiden Blechplättchen. Eine Feder 19' sorgt dafür, dass die Verkeilelemente immer die Tendenz haben, sich gegeneinander und gegen einen eingeschobenene Stiften 11 zu verkeilen. In einem Lösegerät mit einem geeigneten, starken Lösemagneten, können die Blechplättchen oder die Kügelchen von aussen berührungslos seitwärts gezogen werden, worauf der Stift freigegeben wird und rückwärts aus der gesicherten Ware 5 gezogen und entfernt werden kann. Das heisst, dass die Verkeilung der Verkeilelemente 17,18 unter Einwirkung eines äusseren Lösemagnetfeldes gelöst werden kann. Die Verriegelung des Stiftes gegen Herausziehen in einem Verriegelungszustand erfolgt also durch die Klemmelemente unter Einwirkung eines durch die Feder ausgeübten Kraftfeldes. Während dem Lösen befinden sich die Verkeilelemente in einem freigebenden Zustand ebenfalls unter Einwirkung eines, diesmal durch den Lösemagnet von erzeugten, von aussen wirkendes Kraftfeldes, eben des Lösemagnetfeldes.
Der Tag kann wie bekannt zusätzlich mit einer Induktionsspule, zur Kontrolle von unberechtigtem Fortragen versehen sein. Auch Farbehälter und anderer Mittel zur Zerstörung der gesicherten Ware können daran angebracht sein. Dies gilt natürlich auch für alle Diebstahlsicherungen gemäss der neuen Erfindung.

Am neuen, erfindungsgemässen Verfahren, aus den Figuren 2 bis 5 in Kombination ersichtlich, ist nun entscheidend, dass die verkeilbaren Verkeilelemente 17, 18 mit Hilfe eines permanentes Arretier-Magnetfeldes als Arretierkraftfeld im Arretierteil 10 gegeneinander verspannt sind. Dieses wird durch zwei im Arretierteil selbst angeodnete Permanentmagnete erzeugt. Durch Aendern des Magnetfeldes in einem entsprechend ausgestalteten Lösegerät 2 mittels kurzem Magnetisierimpuls von "Anziehung" auf "Abstossung" die Verkeilung lösbar wird. Dies wird ermöglicht, indem die Verkeilemente 17,18 mit Permanentmagneten wirkverbunden ausgeführt sind. Und zwar steht ein erstes Verkeilelement 17 mit einem ersten Permanentmagneten 15 aus permanentmagnetisch umpolbaren Material und ein zweites Verkeilelement 18 mit einem zweiten Permanentmagneten 16 aus magnetisch nicht umpolbarem Material in Wirkverbindung. Dabei ist eines der beiden Permanentmagnete 15 oder 16 mit einem der Verkeilelemente 17 oder 18 in mechanischer Verbindung. Durch magnetische Abschirmung der umpolbaren Magnete kann die benötigte Magnetisierstärke eingestellt werden, indem geeignete Materialien gewählt werden und durch geeignete Formgebung und Gestaltung der Gehäuseteile 13 und 14. Die Umpolung des umpolbaren Permanentmagneten geschieht durch ein Magnetisierungselement 20 im Lösegerät 2. Dieses besteht aus einer Elektromagnetspule, welche für den Lösevorgang einmalig und kurzzeitig aktiviert wird. Dies ist in Figur 3 gezeigt und weiter unten beschrieben. Mit einer geeigneten Ansteuerung ist es möglich, die Steuerung der Aktivierung respektive den Lösevorgang für eine solches Sicherungselement über ein Steuersignal von einer Kasse oder von anderen Kontrollgeräten abhängig zu machen. Beispielsweise kann dies so geschehen, dass ein Betrag oder sogar ein bestimmter Betrag in die Kasse eingetippt und quittiert sein muss, um die Aktivierung freizugeben. Denkbar ist auch ein Freigeben der Sicherungselemente unter automatischem Abbuchen des Kaufbetrages auf einem Konto oder dergleichen.

In Figur 2 ist eine erfindungsgemässe Diebstahlsicherung dargestellt. Die entscheidenden Unterschiede gegenüber dem Stand der Technik sind gut ersichtlich. Ein Sicherungselement besteht wie nach dem Stand der Technik aus einem Stift 11 mit einem breiten Kopf 12. Der Stift 11 wird durch eine zu sichernde Ware 5 durchgesteckt, so dass der breiter Kopf 12 an der Ware auf der einen Seite anliegt. Der Stift 11 ist nun auf der anderen Seite der Ware 5 im Arretierteil 10 eingesteckt Rind lösbar verankert. Der Arretierteil 10 weist ein Gehäuse auf mit einem Gehäuseboden 13, welcher hier an der Ware 5 anliegt, und einem Gehäusedeckel 14. Zwischen Gehäuseboden 13 und Gehäusedeckel 14 befindet sich ein Hohlraum, welcher zur Aufnahme der weiteren Sicherungselemente dient. Der Stift 11 durchstösst nun den Gehäuseboden 13 und anschliessend das erste Verkeilelement 17 und das zweite Verkeilelement 18 und ist dadurch und mittels den Sicherungselementen 19 im Arretierteil 10 verkeilt gehalten. Neu ist nun, dass das erste Verkeilelement 17 mit einem ersten Permanentmagneten 15 fest verbunden ist. Wichtig ist, dass dieser erste Permanentmagnet 15 aus gering koerzitievem Material besteht und somit entmagnetisierbar oder sogar in seiner Polung (N-S) umkehrbar, also umpolbar ist. Im Abstand vom ersten Permanentmagneten 15 befindet sich ein zweiter Permanentmagnet 16. Der zweite Permanentmagnet 16 ist im Gehäusedeckel 14 befestigt und magnetisch gegebenenfalls in dieser Lage durch den Gehäusedeckel 14 abgeschirmt. Er besteht zudem aus hochkoerzitivem Material. Er ist somit nicht umpolbar und behält seine Polung (N-S) dauernd bei. Zwischen diesen beiden Permanentmagneten befindet sich eine kleine Feder, welche die durch die Permanentmagnete erzeugte verkeilungsverursachende Kraft unterstützt und die losen Verkeilelemente 17,18 gegen Verrutschen sichert. Im Falle des geschlossenen Sicherungselementes sind nun der erste Permanentmagnet 15 und der zweite Permanentmagnet 16 so gepolt, dass sich gleiche Pole, also N-N oder S-S, gegenüberliegen und die Permanentmagnete sich abstossen. Dadurch werden die Verkeilelemente 17 und 18 zusammengedrückt, verkeilen sich gegeneinander und halten den Stift 11 fest. Die Ware ist gesichert. Der Gehäuseboden wird vorteilhafterweise Eisen enthalten, und damit zusätzlich als magnetische Abschirmung während dem weiter unten beschriebenen Lösevorgang dienen.

Der Zustand während dem Lösen der Sicherungselemente ist in der Figur 3 im Zusammenhang mit mit einem zugehörenden Lösegerät 2 dargestellt.

Das Lösegerät 2 weist ein Magnetisierelement 21 in einem magnetisch gegen aussen abschirmenden Gehäuse auf. Oben ist eine Oeffnung 20 auf zum Einschieben eines Arretierteiles 10 vorhanden. Im Lösegerät 20 befindet sich eine Elektromagnetspule 23. Die Elektromagnetspule 23 ist so angeordnet, dass sie den eingeschobenen Arrtierteil 10 im Bereich seiner Permanentmagnete 15, 16 umfasst. Im weiteren ist im Magnetisierelement 20 ein Mikroschalter 25 so angeordnet, dass er beim Einschieben des Arretierteiles 10 betätigt wird und einen Stromkreis schliesst. Dadurch wird der Stromkreis zum Betrieb des Elektromagneten erst frei gegeben. Der Elektromagnet 23 des Magnetisierelementes 20 ist über eine Speiseleitung 24 mit einem Steuer- und Speisegerät verbunden.
Das Magnetisiergerät 20 magnetisiert nun den tiefkorzitiven Permanentmagneten 15 im Arretierteil 10 und entmagnetisiert oder polt diesen dadurch um. Nun ziehen sich die beiden Permanentmagnete 15 und 16 gegenseitig an und die Verkeilung durch die Verkeilelemente 17,18 wird gelöst. Der Stift 11 kann aus dem Arretierteil 10 und damit aus der gesicherten Ware 5 herausgezogen werden.

Tags, die durch Umpolung des umpolbaren Permanentmagnetes zur Lösung des Sicherungselementes freigegeben sind, verbleiben in diesem Zustand. Sie sind inaktiviert. Die Tags müssen also zum neuen Gebrauch als Sicherungselement wiederum aktiviert werden. Dies geschieht durch nochmaliges Umpolen des tiefkoerzitiven Permanentmagneten. Dies kann in der gleichen, aber Feldmässig umgesteuerten, oder in einer separaten Magnetisieranlage geschehen. Erst nach einer solchen neuen Ummagnetisierung, nach der sich die beiden Permanentmagnete 15 und 16 wieder anziehen, sind Tags für einen weiteren Gebrauch aktiviert.

Die aktivierten Tags können von neuem zur Sicherung von Ware benützt werdem. Der Stift 11 wird durch die Ware gestossen und in den Arretierteil 10 eingeschoben. Die Verkeilung durch die Verkeilelemente geschieht dadurch wie üblich nach dem Zusammenstecken von selbst.

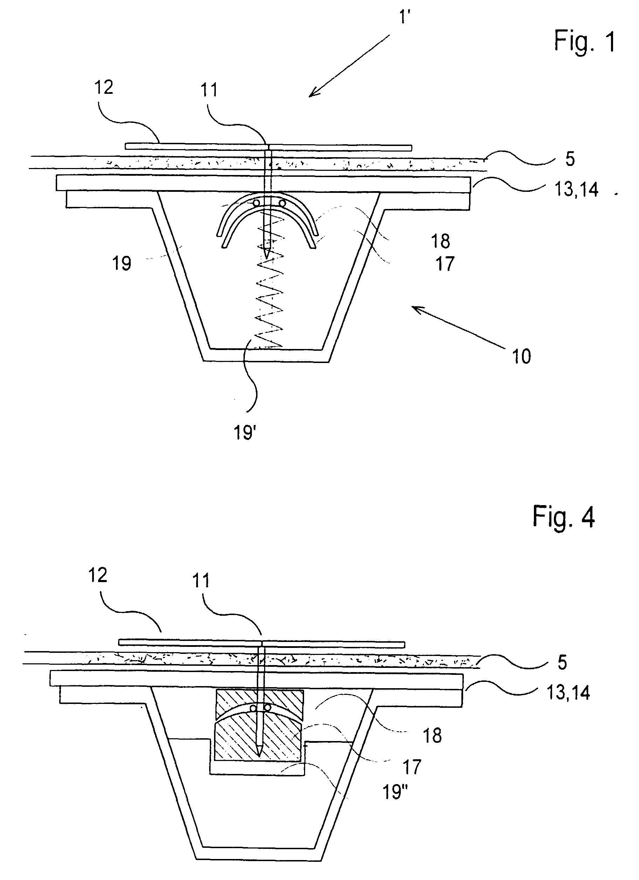

In Figur 4 ist eine bevorzugte Ausführungsform der erfindungsgemässen Sicherungselemente dargestellt. Um die Anzahl der einzelnen Teile zu minimieren sind die Verkeilelemente 17, 18 selbst als Permanentmagnete ausgeführt. Weil das permanentmagnetische Material spröd ist, empfiehlt es sich, die Verkeilelemente 17, 18 massiver und nicht nur in Form dünner Blechteile auszuführen. Die Funktionsweise ist natürlich identisch zur oben beschriebenen Variante. Bei dieser bevorzugten Variante kann das erste Verkeilelement 17 als niedrig koerzitiver Permanentmagnet 16 und das zweite Verkeilelement 18 als hochkoerzitiver erster Permanentmagnet 15 ausgeführt sein. Oder aber es kann das zweite Verkeilelement 18 als niedrig koerzitiver zweiter Permanentmagnet 16 ausgeführt sein und das erste Verkeilelement 17 als hochkoerzitiver erster Permanentmagnet 15. Wiederum empfiehlt es sich, eine kleine, nicht dargestellte Feder 19', oder aber eine Führung 19", wie dargestellt, im Arretierteil so anzuordnen, dass er die als Permanentmagnete 15,16 ausgestalteten verschiebbaren Verkeilelemente 17,18 vor einem zu weiten Auseinanderrutschen bewahrt. Allerdings muss zwischen der Führung 19" und den Verkeilelementen 17,18 genügend Spiel vorhanden sein, damit die Verkeilung und die Lösung der Verkeilung durchführbar ist.

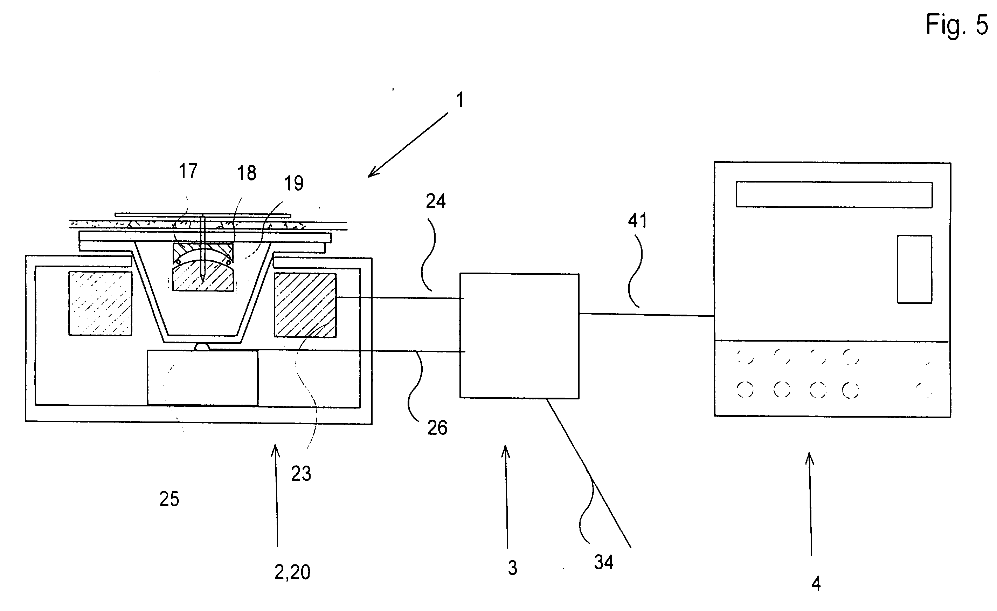

In der Figur 5 ist nun die ganze Vorrichtung zur Durchführung des Verfahrens mit Diebstahlsicherung 1 und Lösegerät 2 im Ueberblick dargestellt. Sie besteht aus dem Lösegerät 2, hier mit einem eingeschobenen Sicherungselement 1 gezeigt, und einem Steuer- Speisegerät 3 sowie einem Kontrollgerät, hier in Form einer Kasse 4. Dabei ist das Steuer- und Speisegerät 3 einerseits über die Leitung 26 mit dem Mikroschalter 25 und andererseits über die Speiseleitung 24 mit der Magnetisierspule 23 des Magnetisierelementes 20 verbunden. Das Steuer-Speisegerät 3 ist über die Zuleitung 34 mit dem Netz der Stromversorgung verbunden. Es ist offensichtlich, dass ein derartiges Magnetisiergerät während der Aktivierung für eine ganz kurze Zeit Energie benötigt. Es fliesst in dieser Zeitspanne der zum Umpolen eines umpolbaren Permanentmagnetes benötigte Strom. Während der kurzen Zeit der Umpolung respektive des Mangetisiervorganges existiert innerhalb dem Magnetisierelement 20 ein starkes Magnetfeld. Dieses muss gut geegen aussen abgeschirmt sein. Dementsprechend ist das Magnetisierelement 20 mit einer magnetischen Abschirmung zu versehen. Die Oeffnung wird bei eingelegtem Arretierteil 10 von dessen Rückenplatte 13 verschlossen und somit kann die Abschirmung über eine Kontaktzone 21 vervollständigt werden. Die Ausführung der Rückenplatte 13 aus eisenhaltigem und leitendem Material ermöglich zudem eine zusätzliche elektrische Kontaktfunktion zur Steuerung oder Absicherung des Lösegerätes mit einzubeziehen, indem bei eingelegtem Arretierteil dessen Rückenplatte mit der Abschirmung des Lösegerätes in Kontakt steht. Auf diese Weise wird erreicht, dass bei eingeschobenem Arretierteil 10 das Lösegerät respektive die Magnetisiereinheit 20 weitgehendst magnetisch gegen aussen abgeschirmt ist, so dass ausserhalb des Lösegerätes keine magnetische Beeinflussungen entstehen können.

Ueber eine Leitung 41 kann das Steuer- Speisegerät mit einem Kontrollgerät, hier einer Kasse 4 verbunden sein, was weitere Kontroll und Steuermöglichkeiten erlaubt
Dadurch wird es möglich, jedes Lösen von derartigen Sicherungselementen von einer bestimmten Aktion an der Kassa 4 abhängig zu machen, indem erst durch diese Aktion das Steuer- und Speisegerät 3 vorübergehend freigegeben wird respektive aktiviert wird. Es kann soweit gehen, dass der richtige Preis der Ware, welcher auf dem Tag selbst beispielsweise in einem Strichcode angegeben sein kann, an der Kasse 4 eingetippt und sogar als erhalten quittiert ist, bevor das Lösegerät 2 für den Lösevorgang für betreffenden Ware aktiviert wird und das Sicherungselement entfernt werden kann. Statt einer Kasse 4 kann auch ein Kreditkartenleser oder ähnliches mit entsprechender Funktion verwendet werden.

Zur Aktivierung deaktivierter der Arretierteile 10 kann entweder das gleiche Lösegerät 2 verwendet werden, wobei allerdings die Magnetisierung mit gegenüber dem Lösen umgekehrter Polung durchgeführt erden muss. Es kann aber auch vorteilhaft sein, die Aktivierung der Arretierteile 10 in einer speziellen Aktivierungseinheit. Analog zum Lösegerät durchzuführen. Dadurch kann das Anbringen der Tags beispielsweise auf berechtigte Personen und dergleichen eingeschränkt werden.

## Patentansprüche

1. Verfahren zur Sicherung von Waren (5) gegen Diebstahl, bei welchem ein mit einem breiten Kopf (12) versehener Stift (11) durch die zu sichernde Ware (5) durchgestossen wird und auf der Gegenseite in einem Arretierteil (10) eingeschoben wird, wobei er im Arretierteil (10) unter Einwirkung eines Arretierkraftfeldes durch verkeilen mittels mindestens zwei gegeneinander und gegen den Stift verkeilbaren Verkeilelemente (17,18) gehalten wird, wodurch der Stift (11) gegen Herausziehen gesichert ist,
und bei welchem die Ware freigegeben wird, indem die Verkeilung der Verkeilelemente (17, 18) durch Einwirken eines Lösemagnetfeldes lösbar ist, so dass der Stift aus dem Arretierteil (10) und aus der gesicherten Ware (5) entfernt wird,
dadurch gekennzeichnet, dass
das Arretierkraftfeld und das Lösemagnetfeld durch zwei im Arretierteil (10) angeordnete Permanentmagnet (15, 16) erzeugt werden, wobei das Arretierkraftfeld zum Anbringen des Stiftes (11) und des Arretierteiles (10) an der Ware durch magnetisches Umpolen des einen der Permanentmagnete (15 oder 16) zum Lösemagnetfeld wird und umgekehrt.

2. Verfahren nach Anspruch 1, dadurch gekennzeichnet, dass das Umpolen des einen Permanentmagneten (15 oder 16) in einem Magnetisierelement (20), in welches der Arretierteil (10) eingelegt wird, erfolgt.

3. Verfahren nach Anspruch 2, dadurch gekennzeichnet, dass das Magnetisierelement von einer Kasse über ein Steuersignal aktiviert wird.

4. Verfahren nach Anspruch 3, dadurch gekennzeichnet, dass das Steuersignal erst nach einer Registrierung oder /und Quittierung des Verkaufs der gesicherten Ware ausgelöst wird.

5. Vorrichtung mit Sicherungselementen und Lösegerät zur Durchführung des Verfahrens nach Anspruch 1, wobei jedes Sicherungselement (1) einen durch die zu sichernde Ware (5) durchstossbaren Stift (11) und einen Arretierteil (10) umfasst, in welchem mindestens zwei gegeneinander und gegen den Stift (11) verkeilbare Verkeilelemente (17, 18) angeordnet sind, und wobei die Verkeilung der Verkeilelemente (17,18) unter Einwirkung eines Arretier-Kraftfeldes geschieht und durch Einwirkung eines Lösemagnetfeldes lösbar ist, und mit einem Lösegerät zum Lösen der Verkeilung, dadurch gekennzeichnet, dass der Arretierteil (10) einen ersten Permanentmagneten (15) und einen zweiten Permanentmagneten (16) zur Erzeugung des Arretier-Kraftfeldes als ein Arretiermagnetfeld und des Lösemagnetfeldes aufweist und dass mindestens einer der Permanentmagnete (15, 16) mit einem der Verkeilelemente (17, 18) in mechanischer Verbindung steht.

6. Vorrichtung nach Anspruch 5, dadurch gekennzeichnet, dass der eine Permanentmagnet (15) aus hochkoerzitivem Material und der andere Permanentmagnet (16) aus niedrig koerzitivem , magnetisch umpolbaren, Material besteht sind.

7. Vorrichtung nach Anspruch 5, dadurch gekennzeichnet, dass das Arretiermagnetfeld durch magnetisches Umpolen des einen der beiden Permanentmagnete in das Lösemagnetfeld umpolbar ist.

8. Vorrichtung nach Anspruch 5, dadurch gekennzeichnet, dass die Verkeilelemente (17,18) selbst als Permanentmagnete (15,16) ausgeführt sind.

9. Vorrichtung nach Anspruch 5, dadurch gekennzeichnet, dass das Lösegerät (2) ein Magnetisierelement (20) mit einer Elektromagnetspule (23) und eine Steuerung und Speisung (3) für das Magnetisierelement (20) aufweist, mittels welchen die Umpolung des umpolbaren Permanentmagneten (16) durchführbar ist.

10. Vorrichtung nach Anspruch 9, dadurch gekennzeichnet, dass das Magnetisierelement (20) mit der Steuerung und Speisung (3) über einen Mikroschalter (25) verbunden ist, so dass das Magnetisierelement (20) nur bei eingeschobenem Arretierteil (10) aktivierbar ist.

11. Vorrichtung nach Anspruch 9, dadurch gekennzeichnet, dass die Steuerung (3) über ein Registriergerät oder eine Kasse (4) steuerbar ist.

12. Vorrichtung nach Anspruch 9, dadurch gekennzeichnet, dass das Lösegerät (2) mindestens bei eingelegtem Arretierteil (10) magnetisch abgeschirmt ist.

## Claims

1. A method for securing goods (5) against theft with which a pin (11) provided with a broad head (12) is pushed through the article (5) to be secured and on the opposite side is inserted into a retaining part (10), wherein the pin is held in the retaining part (10) under the effect of a retaining force field by wedging by way of at least two wedging elements (17,18) which can be wedged against one another and against the pin, by which means the pin (11) is secured against withdrawal,
and with which the article is released in that the wedging of the wedging elements (17,18) is releasable by the effect of a releasing magnetic field so that the pin may be removed from the retaining part (10) and from the secured article (5),
characterised in that
the retaining force field and the releasing magnetic field are produced by two permanent magnets arranged in the retaining part (10), wherein the retaining force field for attaching the pin (11) and the retaining part (10) on the article, by way of magnetic pole reversal of one of the permanent magnets (15 or 16), becomes a releasing magnetic field or vice versa.

2. A method according to claim 1, characterised in that the pole reversal of the one permanent magnet (15 or 16) is effected in a magnetising element (20) in which the retaining part (10) is inserted.

3. A method according to claim 2, characterised in that the magnetising element is activated by a till via a control signal.

4. A method according to claim 3, characterised in that the control signal is only released upon registration and/or giving a receipt of purchase of the secured article.

5. A device with securing elements and a release apparatus for carrying our the method according to claim 1, wherein each securing element (1) comprises a pin (11) which can be pushed through the article (5) to be secured and a retaining part (10) in which there are arranged at least two wedging elements (17,18) wedgeable against one another and against the pin (11) and wherein the wedging of the wedging elements (17,18) is effected under the effect of a retaining force field and can be released under the effect of a releasing magnetic field, and with a release apparatus for releasing the wedging, characterised in that the retaining part (10) comprises a first permanent magnet (15) and a second permanent magnet (16) for producing the retaining force field as a retaining magnetic field and for producing the releasing magnetic field and that at least one of the permanent magnets (15,16) is in mechanical connection with one of the wedging elements (17,18).

6. A device according to claim 5, characterised in that the one permanent magnet (15) consists of high-coercive material and the other permanent magnet (16) of low-coercive, magnetically reversely polable material.

7. A device according to claim 5, characterised in that the retaining magnetic field can be reversed poled into the releasing magnetic field by way of magnetic reverse poling of one of the two permanent magnets.

8. A device according to claim 5, characterised in that the wedging elements (17,18) themselves are designed as permanent magnets (15,16).

9. A device according to claim 5, characterised in that the release apparatus (2) comprises a magnetising element (20) with an electromagnetic coil (23) and a control and supply (3) for the magnetising element (20), by way of which the reverse poling of the reversely polable permanent magnet (16) can be carried out.

10. A device according to claim 9, characterised in that the magnetising element (20) is connected to the control and supply (3) via a microswitch (25) so that the magnetising element (20) can only be activated with an inserted retaining part (10).

11. A device according to claim 9, characterised in that the control (3) is controllable via a registering apparatus or a till (4).

12. A device according to claim 9, characterised in that the release apparatus (2) is magnetically shielded at least with an inserted retaining part (10).

## Revendications

1. Procédé pour la protection de marchandises (5) contre le vol, dans lequel une pointe (11) munie d'une tête large (12) est passée à travers la marchandise (5) à protéger et est introduite par son autre extrémité dans un élément d'arrêt (10), tandis qu'elle est maintenue dans l'élément d'arrêt (10) sous l'action d'un champ de force d'arrêt par coincement au moyen d'au moins deux éléments d'assujettissement (17,18) pouvant être assujettis l'un contre l'autre et contre la pointe, la pointe (11) étant ainsi empêchée d'être enlevée,
et dans lequel la marchandise est libérée lorsqu'on supprime le coincement des éléments d'assujettissement (17,18) sous l'action d'un champ magnétique de libération, de telle sorte que la pointe est enlevée de l'élément d'arrêt (10) et de la marchandise protégée (5),
caractérisé en ce que le champ magnétique d'arrêt et le champ magnétique de libération sont produits par deux aimants permanents (15,16) situés dans l'élément d'arrêt (10), tandis que le champ de force d'arrêt pour amener la pointe (11) et l'élément d'arrêt (10) au niveau de la marchandise est transformé en champ magnétique de libération par inversion de la polarité magnétiques de l'un des aimants permanents (15,16) et inversement.

2. Procédé selon la revendication 1, caractérisé en ce que l'inversion des polarités des pôles de l'un des aimants permanents (15 ou 16) s'effectue dans un élément magnétisant (20), dans lequel est placé l'élément d'arrêt (10).

3. Procédé selon la revendication 2, caractérisé en ce que l'élément magnétisant est activé par une caisse au moyen d'un signal de commande.

4. Procédé selon la revendication 3, caractérisé en ce que le signal de commande est déclenché après un enregistrement et/ou une facturation de l'achat de la marchandise protégée.

5. Dispositif comportant des éléments de protection et un appareillage de libération pour la mise en oeuvre du procédé selon la revendication 1, dans lequel chaque élément de protection (1) comporte une pointe (11) pouvant traverser la marchandise (5) à protéger et un élément d'arrêt (10), dans lequel sont disposés au moins deux éléments de coincement (17,18) pouvant être assujettis l'un par rapport à l'autre et par rapport à la pointe (11), et dans lequel l'assujettissement des éléments de coincement (17,18) sous l'action d'un champ de force d'arrêt peut être supprimé sous l'action d'un champ magnétique de libération, et comportant un appareil de libération pour la libération du coincement, caractérisé en ce que l'élément d'arrêt (10) présente un premier aimant permanent (15) et un second aimant permanent (16) pour la production du champ de force d'arrêt sous forme d'un champ magnétique d'arrêt et du champ magnétique de libération, et en ce qu'au moins l'un des aimants permanents (15,16) est en liaison mécanique avec l'un des éléments de coincement (17,18).

6. Dispositif selon la revendication 5, caractérisé en ce que l'un des aimants permanents (15) est composé d'une matière fortement coercitive et l'autre aimant permanent (16) est composé d'une matière faiblement coercitive, dont la polarité magnétiques peu être inversée.

7. Dispositif selon la revendication 5, caractérisé en ce que le champ magnétique d'arrêt peut être inversé pour donner le champ magnétique de libération par inversion la polarité magnétique de l'un des deux aimants permanents.

8. Dispositif selon la revendication 5, caractérisé en ce que les éléments de coincement (17,18) sont eux-mêmes constitués d'aimants permanents (15,16).

9. Dispositif selon la revendication 5, caractérisé en ce que l'appareil de libération (2) comporte un élément magnétisant (20) ayant une bobine électromagnétique (23), ainsi qu'une commande et une alimentation (3) pour l'élément magnétisant (20), au moyen desquelles peut être effectuée l'inversion de la polarité de l'aimant permanent à polarité inversable (16).

10. Dispositif selon la revendication 9, caractérisé en ce que l'élément magnétisant (20) est relié à la commande et à l'alimentation (3) au moyen d'un microcommutateur (25), de telle sorte que l'élément magnétisé (20) ne puisse être activé que lorsque l'élément d'arrêt (10) est introduit.

11. Dispositif selon la revendication 9, caractérisé en ce que la commande (3) peut être activée par l'intermédiaire d'un appareil d'enregistrement ou d'une caisse (4).

12. Dispositif selon la revendication 9, caractérisé en ce que l'appareil de libération (2) est protégé magnétiquement au moins par la partie d'arrêt (10) introduite.
